# EUROPÄISCHE PATENTSCHRIFT

(11) **EP 0 961 663 B1**
(45) Veröffentlichungstag und Bekanntmachung des Hinweises auf die Patenterteilung: **05.12.2001**
(21) Anmeldenummer: 98907976.9
(22) Anmeldetag: 23.01.1998
(51) Int. Cl.: B21B 31/07

(54) **VORRICHTUNG ZUM VERTEILEN EINES ÖL-LUFT-GEMISCHS AUF VERSCHIEDENE SCHMIERKANÄLE DES MASCHINENGEHÄUSES**
DEVICE FOR DISTRIBUTING AN OIL-AIR MIXTURE TO DIFFERENT LUBRICATION DUCTS OF A MACHINE HOUSING
DISPOSITIF DE DISTRIBUTION D'UN MELANGE HUILE-AIR DANS DIFFERENTS CONDUITS DE LUBRIFICATION D'UN BATI DE MACHINE

(30) Priorität: 19.02.1997 DE 29702850 U
(43) Veröffentlichungstag der Anmeldung: 08.12.1999
(73) Patentinhaber: Rebs Zentralschmiertechnik GmbH, 40885 Ratingen (DE)
(72) Erfinder: REBS, Alexander, sen., D-40885 Ratingen (DE)
(74) Vertreter: Simons, Johannes, Dipl.-Ing.
(86) Internationale Anmeldenummer: EP9800349
(87) Internationale Veröffentlichungsnummer: WO9836857

(56) Entgegenhaltungen:
- EP-A- 0 596 230
- DE-U- 29 613 087
- FR-A- 1 049 913
- FR-A- 2 433 698
- GB-A- 2 296 300

## Beschreibung

Die Erfindung betrifft eine Vorrichtung zum Verteilen eines Öl-Luft-Gemisches auf verschiedene Schmierkanäle eines Maschinengehäuses, welches eine Bohrung aufweist, in welche die Vorrichtung eingeschoben werden kann, wobei die Vorrichtung aus mindestens einem zylinderförmigen, Verteiler besteht, der an mindestens einer seiner Stirnseiten mittels eines Dichtrings gegenüber der Bohrungswand abgedichtet ist und dessen axiale Position in der Bohrung durch mindestens ein Distanzstück bestimmt ist, wobei der Verteiler und das Distanzstück einzeln in die Bohrung einführbar sind. Vorrichtungen dieser Art haben sich aufgrund ihres einfachen, modulartigen Aufbaus und ihrer sich daraus ergebenden Vielseitigkeit in der Praxis bewährt. Sie ermöglichen das genau dosierte Verteilen von als Öl-Luft-Gemisch in einer zentralen Versorgungsleitung transportierten Schmiermittelmengen auf eine Vielzahl von Schmierstellen.

Aufgrund der großen Anzahl von Schmierstellen, die beispielsweise an einem Walzwerk vorhanden sind oder deren Unzugänglichkeit, ist es in der Regel erforderlich, in die Maschinengehäuse zur Aufnahme der Verteiler bestimmte Bohrungen von beträchtlicher Länge einzubringen. Die zu einer Vorrichtung der voranstehend genannten Art gehörenden Verteiler und Distanzstücke werden herkömmlicherweise in diese Bohrungen mittels Spezialwerkzeug von geeigneter Länge eingeführt und positioniert. Ein Problem besteht dabei darin, die für die Abdichtung der einzelnen Verteiler gegeneinander erforderlichen Ringdichtungen in ihrer ordnungsgemäßen Dichtlage auszurichten.

Zur Lösung der Probleme bei der Montage von Vorrichtungen der eingangs genannten Art ist in dem Deutschen Gebrauchsmuster DE 296 13 087 U1 vorgeschlagen worden, die einzelnen Module, d.h. die Verteiler, Distanzstücke und Dichtungen, zu einer säulenartigen Einheit zusammenzufassen und diese Einheit in die Bohrung einzuführen. In der Bohrung kann die Einheit durch Spannmictel in axialer Richtung unter Zusammenpressen der Ringdichtungen verspannt werden.

Die aus dem erwähnten Gebrauchsmuster bekannte Vorrichtung ermöglicht zwar ein erleichtertes Einführen bzw. Herausziehen der zu einer Baueinheit zusammengefaßten Elemente in die bzw. aus der Bohrung des Maschinengehäuses. Um dies zu erreichen, muß jedoch eine komplizierte Montage der säulenartigen Einheit unter Zuhilfenahme einer Vielzahl zusätzlicher Bauelemente in Kauf genommen werden. Durch die Komplexität der säulenartigen Einheit wird nicht nur die Vielseitigkeit der aus dem Gebrauchsmuster bekannten Vorrichtung eingeschränkt, sondern auch deren Herstellungs- und Wartungskosten gegenüber dem vorbekannten Stand der Technik erheblich erhöht.

Die Aufgabe der Erfindung besteht darin, mit einfachen Mitteln das Montieren einer Vorrichtung der eingangs genannten Art zu erleichtern.

Diese Aufgabe wird erfindungsgemäß dadurch gelöst, daß der Verteiler und / oder das Distanzstück einen an ihrer Stirnseite angeformten Absatz aufweisen, an dem ein Sitz für die Ringdichtung ausgebildet ist, dessen Durchmesser derart auf den Durchmesser der Ringdichtung abgestimmt ist, daß der Außendurchmesser der Ringdichtung während des Einschiebens kleiner als der Innendurchmesser der Bohrung ist, und daß der Absatz in eine Einsenkung einführbar ist, die in die Stirnseite eines der jeweiligen Stirnseite des jeweiligen Verteilers oder Distanzstücks zugeordneten Distanzstücks oder Verteilers eingeformt ist und deren Durchmesser kleiner als der Außendurchmesser der Ringdichtung ist.

Gemäß der Erfindung wird vorgeschlagen, entsprechend der Aufeinanderfolge von Verteilern und Distanzstücken diese Bauteile mit einem an ihrer Stirnseite angeformten Absatz auszustatten. Auf diesen Absatz kann die zur Abdichtung benötigte Ringdichtung zum Einschieben in die Bohrung des Maschinengehäuses aufgesetzt werden. Dabei sind die Abmessungen des Absatzes derart auf die Abmessungen des Dichtrings abgestimmt, daß der Außendurchmesser des Rings im auf den Absatz aufgesetzten Zustand kleiner als der Innendurchmesser der Bohrung ist. Daher besteht während des Einführens der Ringdichtung in die Bohrung kein Kontakt zwischen der Bohrungswand und der Dichtung. Auf diese Weise kann der Dichtring auf denkbar einfache Weise ohne die Gefahr eines Abscherens an den Mündungsöffnungen der Schmiermittelkanäle in die Bohrung eingeführt werden.

Wenn der Verteiler bzw. das Distanzstück seine durch einen zuvor eingeführten Verteiler oder ein zuvor eingeführtes Distanzstück festgelegte Position in der Bohrung erreicht hat, greift der Absatz des Verteilers oder des Distanzstücks in die entsprechende Einsenkung des zuvor eingeführten Elements. Da der Durchmesser der Einsenkung an den Durchmesser des Absatzes angepaßt, also kleiner als der Außendurchmesser der Ringdichtung ist, wird die Ringdichtung mit dem Einführen des Absatzes in die Einsenkung zwischen dem Rand der Einsenkung und der Stirnseite des Verteilers oder Distanzstücks gepreßt, bis sie an der Bohrungswand anliegt und die aneinander angrenzenden Elemente gegeneinander abdichtet.

Eine bevorzugte Ausgestaltung der Erfindung ist dadurch gekennzeichnet, daß der Absatz kegelstumpfförmig mit in Richtung des Verteilers oder Distanzstücks ansteigender Steigung ausgebildet ist. Durch den kegelförmigen, in Richtung des Verteilers oder Distanzstücks ansteigenden Verlauf des Absatzes wird der auf den Absatz aufgesetzte Dichtring beim Einführen des Absatzes in die dem Absatz zugeordnete Einsenkung zuverlässig und schonend aufgeweitet, bis seine Dichtposition erreicht ist.

Vorteilhaft ist es auch, wenn an den Absatz ein die Ringdichtung auf dem Absatz haltender radial sich erstreckender Vorsprung ausgebildet ist. Durch diesen Vorsprung wird das Anordnen der Ringdichtung erleichtert und deren Halt während des Einschiebens in die Bohrung gesichert. Dies gilt insbesondere dann, wenn der Vorsprung ringförmig ausgebildet ist. Eine den Dichtring gegen Beschädigung besonders schützende Ausgestaltung der Erfindung ist in diesem Zusammenhang dadurch gekennzeichnet, daß der Übergang zwischen dem Absatz und dem Vorsprung nach Art einer Kehle ausgebildet ist.

Nachfolgend wird die Erfindung anhand einer ein Ausführungsbeispiel in Ausschnitten darstellenden Zeichnung näher erläutert. Es zeigen:
- Fig. 1: eine Öl-Luft-Verteilvorrichtung in einer ersten Montagestellung in einem Längsschnitt;
- Fig. 2: die Öl-Luft-Verteilvorrichtung nach Fig. 1 in einer zweiten Montagestellung in einem Längsschnitt;
- Fig. 3: die Öl-Luft-Verteilvorrichtung nach Fig. 1 und 2 in einer dritten Montagestellung in einem Längsschnitt.

Die in den Figuren ausschnittsweise gezeigte Vorrichtung zum Verteilen eines Öl-Luft-Gemischs auf eine Vielzahl von nicht gezeigten Schmiermittelkanälen weist einen Verteiler 1 und ein Distanzstück 2 auf. Sowohl der Verteiler 1 als auch das Distanzstück 2 sind mit einer zentralen, axial verlaufenden Bohrung 3 für das Öl-Luft-Gemisch versehen.

An die Stirnseite 2a des Distanzstücks 2 ist ein kegelstumpfförmiger Absatz 4 angeformt, der in Richtung seiner Stirnseite 4a in einer kehlenförmigen Nut 5 in einen radial umlaufenden Vorsprung 6 übergeht. Die Umfangsfläche des Vorsprungs 6 ist in Richtung der Stirnseite 4a abfallend angeschrägt, um das zerstörungsfreie Aufschieben einer Ringdichtung 7 auf den Absatz 4 zu erleichtern.

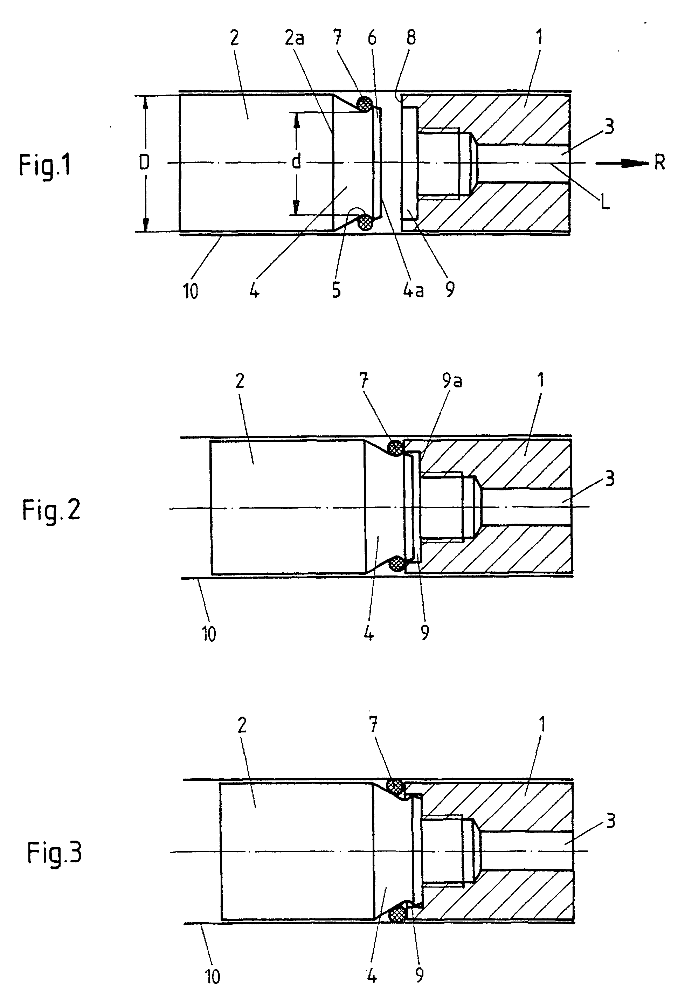

Der Durchmesser d des Absatzes 4 ist im Bereich seiner kehlenförmigen Nut 5 gleich dem Durchmesser der Ringdichtung 7 im entspannten Zustand und nimmt in Richtung der Stirnseite 2a des Distanzstücks 2 zu. Daher liegt die Ringdichtung 7 nach dem Aufschieben über den Vorsprung 6 entspannt in der Nut 5 des Absatzes 4 ein (Fig. 1) und wird, wenn er in Richtung der Stirnseite 2a des Distanzstücks 2 bewegt wird, gleichmäßig aufgeweitet. Im entspannten Zustand ist der Außendurchmesser der Ringdichtung 7 kleiner als der Außendurchmesser D des Distanzstücks 2.

In die dem Distanzstück 2 zugeordnete Stirnseite 8 des Verteilers 1 ist koaxial zur Längsachse L eine Einsenkung 9 eingeformt, deren Durchmesser geringfügig größer als der Durchmesser des radial umlaufenden Vorsprungs 6 und damit einhergehend wesentlich kleiner als der Außendurchmesser D des Distanzstücks 2 ist. Das Distanzstück 2 ist an seiner nicht gezeigten anderen Stirnseite ebenfalls mit einer der Einsenkung 9 entsprechenden Einsenkung ausgestattet. Genauso kann der Verteiler 1 an seiner nicht dargestellten anderen Stirnseite mit einem dem Absatz 4 entsprechenden Absatz versehen sein.

Zur Montage der Verteilvorrichtung wird zunächst der Verteiler 1 in die Bohrung 10 eines weiter nicht dargestellten Maschinengehäuses eingeführt, wobei seine mit der Einsenkung 9 versehene Stirnseite 8 entgegen der Einschubrichtung R ausgerichtet ist. Anschließend wird das Distanzstück 2 in die Bohrung 10 geschoben, bis der Vorsprung 6 des Absatzes 4 die Einsenkung 9 des zuvor eingeschobenen Verteilers 1 erreicht hat. Die Ringdichtung 7 liegt nun an der den Rand der Einsenkung 9 bildenden Ringfläche der Stirnseite 8 des Verteilers 1 an (Fig. 2). Anschließend wird das Distanzstück 2 weiter in Einschubrichtung R bewegt, bis der Vorsprung 6 den Grund 9a der Einsenkung 9 erreicht hat. Dabei gleitet die Ringdichtung 7 auf dem kegelstumpfförmigen Absatz 4 und wird durch dessen Durchmesserzunahme aufgeweitet, bis sie in der Endstellung zwischen der Wand der Bohrung 10 und dem Absatz 4 eingequetscht ist (Fig. 3). Durch Einschieben weiterer nicht gezeigter Verteiler und Distanzstücke, die jeweils in der beschriebenen Weise gegeneinander abgedichtet werden, wird die Montage der Vorrichtung vollendet.

## Patentansprüche

1. Vorrichtung zum Verteilen eines Öl-Luft-Gemisches auf verschiedene Schmierkanäle eines Maschinengehäuses, welches eine Bohrung aufweist, in welche die Vorrichtung eingeschoben werden kann, wobei die Vorrichtung aus mindestens einem zylinderförmigen Verteiler (1) besteht, der an mindestens einer seiner Stirnseiten (8) mittels eines Dichtrings (7) gegenüber der Bohrungswand abgedichtet ist und dessen axiale Position in der Bohrung durch mindestens ein Distanzstück bestimmt ist, wobei der Verteiler (1) und das Distanzstück (2) einzeln in die Bohrung (10) einführbar sind, wobei der Verteiler (1) und / oder das Distanzstück (2) einen an ihrer Stirnseite (2a) angeformten Absatz (4) aufweisen, an dem ein Sitz für die Ringdichtung (7) ausgebildet ist, dessen Durchmesser (d) derart auf den Durchmesser der Ringdichtung (7) abgestimmt ist, daß der Außendurchmesser (D) der Ringdichtung (7) während des Einschiebens kleiner als der Innendurchmesser der Bohrung (10) ist, **dadurch gekennzeichnet, daß** der Absatz (4) in eine Einsenkung einführbar ist, die in die Stirnseite (8) eines der jeweiligen Stirnseite des jeweiligen Verteilers oder Distanzstücks zugeordneten Distanzstücks oder Verteilers eingeformt ist und deren Durchmesser kleiner als der Außendurchmesser der Ringdichtung (7) ist.

2. Vorrichtung nach Anspruch 1, **dadurch gekennzeichnet, daß** der Absatz (4) kegelstumpfförmig mit in Richtung des ihn tragenden Verteilers (1) oder Distanzstücks (2) ansteigender Steigung ausgebildet ist.

3. Vorrichtung nach Anspruch 1 oder 2, **dadurch gekennzeichnet**, **daβ** an dem Absatz (4) ein die Ringdichtung (7) auf dem Absatz (4) haltender Vorsprung (6) ausgebildet ist.

4. Vorrichtung nach Anspruch 3, **dadurch gekennzeichnet, daß** der Vorsprung (6) ringförmig ausgebildet ist.

5. Vorrichtung nach Anspruch 3 oder 4, **dadurch gekennzeichnet, daß** der Übergang zwischen dem Absatz (4) und dem Vorsprung (6) nach Art einer Kehle (5) ausgebildet ist.

## Claims

1. A device for distributing an oil-air mixture to different lubrication ducts of a machine housing that is furnished with a drilled hole into which the device can be inserted, wherein the device includes at least one cylindrical distributor (1), at least one of the frontal surfaces (8) of which is sealed with respect to the surface of the drilled hole by means of an 0-ring (7), and whose axial position in the drilled hole is determined by at least one separator, and distributor (1) and separator (2) can be inserted individually in drilled hole (10), wherein distributor (1) and/or separator (2) are conformed as a shoulder (4) on respective frontal surfaces (2a), which shoulder is conformed to create a seating for 0-ring (7), having a diameter (d) relative to the diameter of 0-ring (7) such that external diameter (D) of 0-ring (7) is smaller than the internal diameter of drilled hole (10) during insertion, **characterized in that** shoulder (4) is movable into a recess conformed in frontal surface (8) of a separator or distributor matched with the respective frontal surface of the matched distributor or separator, and having a diameter smaller than the external diameter of 0-ring (7).

2. The device according to claim 1, **characterized in that** shoulder (4) is in the shape of a truncated cone and is flared in the direction of the distributor (1) or separator (2) of which it forms a part.

3. The device according to claim 1 or 2, **characterized in that** a projecting member (6) is conformed on shoulder (4) to secure 0-ring (7) on shoulder (4).

4. The device according to claim 3, **characterized in that** projecting member (6) is circular in shape.

5. The device according to claim 3 or 4, **characterized in that** the junction of shoulder (4) and projecting member (6) has a chamfered shape (5).

## Revendications

1. Dispositif pour distribuer un mélange huile-air dans différents canaux de lubrification d'un carter de machine, qui comporte un perçage, dans lequel le dispositif peut être inséré, le dispositif étant constitué par au moins un distributeur de forme cylindrique (1), qui est monté de façon étanche par rapport à la paroi du perçage à l'aide d'une bague d'étanchéité (7), au niveau d'au moins l'une de ses faces frontales (8), et dont la position axiale dans le perçage est déterminé par au moins une entretoise, et dans lequel le distributeur (1) et l'entretoise (2) peuvent être introduits individuellement dans le perçage (10), où le distributeur (1) et/ou l'entretoise (2) possèdent un épaulement (4) formé sur leur face frontale (2a) et au niveau duquel est formé un appui pour la bague d'étanchéité (7) et dont le diamètre (d) est réglé sur le diamètre de la bague d'étanchéité (7) de telle sorte que le diamètre extérieur (D) de la bague d'étanchéité (7) est inférieur au diamètre intérieur du perçage (10) pendant l'insertion, **caractérisé en ce que** l'épaulement (4) peut être inséré dans un renfoncement, qui est formé dans la face frontale (8) d'une entretoise ou d'un distributeur, associé à la face frontale respective du distributeur respectif ou de l'entretoise respective, et dont le diamètre est inférieur au diamètre extérieur de la bague d'étanchéité (7).

2. Dispositif selon la revendication 1, **caractérisé en ce que** l'épaulement (4) est agencé sous la forme d'un tronc de cône qui possède une inclinaison qui remonte en direction du distributeur (1) ou de l'entretoise (2), qui le porte.

3. Dispositif selon la revendication 1 ou 2, **caractérisé en ce qu'**une partie saillante (6) retenant la bague d'étanchéité (7) sur l'épaulement (4), est formée sur l'épaulement (4).

4. Dispositif selon la revendication 3, **caractérisé en ce que** l'appendice saillant (6) est agencé avec une forme annulaire.

5. Dispositif selon la revendication 3 ou 4, **caractérisé en ce que** la jonction entre l'épaulement (4) et la partie saillante (6) est agencée sous la forme d'une gorge (5).
